# EUROPEAN PATENT APPLICATION

(11) **EP 1 755 339 A2**
(43) Date of publication of application: **21.02.2007**
(21) Application number: 06012456.7
(22) Date of filing: 17.06.2006
(51) Int. Cl.: H04N 7/173

(54) **System and method for implementing channel change operations in internet protocol television systems**

(30) Priority: 16.08.2005 US 204441
(71) Applicant: Alcatel USA Sourcing, L.P., 75075 Plano (US)
(72) Inventor: Skoog, Frederick, H., Colleyville, Texas 76034 (US)
(74) Representative: Schäfer, Wolfgang

(57) **Abstract**

System and method for facilitating channel change operations in an Internet Protocol television ("IPTV") system are described. One embodiment is a method of implementing a channel change in an IPTV system comprising a set top box ("STB") connected between a TV and an access network. The method comprises, responsive to a request to view a new channel, the STB sending a control message to the access network to join an IP multicast group pair comprising a normal video stream and a companion video stream for the new channel; and responsive to receipt of the control message, the access network transmitting to the STB the normal video stream and the companion video stream.

## Description

This invention was made under the support of the United States Government, Department of Commerce, National Institute of Standards and Technology (NIST), Award Number 70NANB3H3053. The United States Government has certain rights in the invention.
CROSS-REFERENCE TO RELATED APPLICATION(S)

This application discloses subject matter related to the subject matter disclosed in the following commonly owned co-pending patent application: "SYSTEM AND METHOD FOR SMOOTHING CHANNEL CHANGING IN INTERNET PROTOCOL TELEVISION SYSTEMS," filed August 16, 2005, Application No.: 11/204,440 (Attorney Docket No. 1285-0167US), in the name(s) of: Donald P. Zriny, Frederick H. Skoog, and Niel Ransom, which is hereby incorporated by reference.

### BACKGROUND OF THE INVENTION

### Technical Field of the Invention

The present invention generally relates to Internet protocol television ("IPTV") systems. More particularly, and not by way of any limitation, the present invention is directed to a system and method for implementing channel changes in IPTV systems.

### Description of Related Art

IPTV has become a common denominator for systems in which television and/or video signals are distributed to subscribers using a broadband connection, such as DSL, over Internet protocol. In general, IPTV systems utilize a digital broadcast signal that is sent by way of a broadband connection (e.g., DSL) and a set top box ("STB") that is programmed with software that can handle subscriber requests to access media sources via a television connected to the STB. A decoder in the STB handles the task of decoding received IP video signals and converting them to standard television signals for display on the television.

Because DSL is a bandwidth-limited medium, changing channels in IPTV networks necessitates that compromises be made between the speed at which the channel change can be completed and the quality of the video presented to the subscriber immediately following the channel change request. One solution has been to generate two video streams for each channel, one of which (the "normal video stream") provides normal viewing quality (i.e., resolution), but at bit rate compressed by extending the period between I-Frames in the transported video stream. The second video stream (the "companion video stream") is a down-sampled stream at a lower video quality and lower bit rate, but it contains I-Frames at a higher rate. Responsive to a channel change request, the Digital Subscriber Line Access Multiplexer ("DSLAM") immediately switches to the companion video stream of the requested channel, thereby to ensure quick delivery of an 1-Frame to the set-top box video decoder so that the decoder can display the new channel as soon as possible. In this approach, it is then the responsibility of the DSLAM to switch to the normal video stream after some predetermined time period, at which point, the normal video stream will be provided to the STB decoder for decoding and display.

The foregoing solution suffers from several deficiencies. First, it requires the DSLAM to maintain state information on the channel change action, implement a timer, and act on the timer expiration to perform the second half of the channel change procedure (i.e., terminating transmission of the companion video stream and providing the normal video stream to the STB). Second, it can result in the STB video decoder misinterpreting the situation if the normal and companion video streams do not switch cleanly at I-Frame boundaries. Additionally, if the normal and companion video streams are switched in the middle of a Group of Pictures ("GOP"), the decoder might not be able to process the video without disruption. Finally, this solution may require the DSLAM to be aware of the location of I-Frames within the video streams, thus adding a high level of complexity and cost to the DSLAM.

### SUMMARY OF THE INVENTION

Therefore, set forth herein is a method and system for implementing channel change operations in IPTV systems.

One embodiment is a method of implementing a channel change in an Internet Protocol television ("IPTV") system comprising a set top box ("STB") connected between a TV and an access network. The method comprises, responsive to a request to view a new channel, the STB sending a control message to the access network to join an IP multicast group pair comprising a normal video stream and a companion video stream for the new channel; and responsive to receipt of the control message, the access network transmitting to the STB the normal video stream and the companion video stream.

Another embodiment is a method of operating an STB to implement a channel change in an Internet Protocol television ("IPTV") system. The method comprises, responsive to receipt of a request to view a new channel, sending a control message to an access network to join an IP multicast group pair comprising a normal video stream and a companion video stream for the new channel; and receiving at the STB the normal video stream and the companion video stream.

Another embodiment is an Internet Protocol television ("IPTV") system. The IPTV system comprises a set top box ("STB") for receiving a request to view a new channel and, responsive to the request, transmitting a control message to join an IP multicast group pair comprising a normal video stream and a companion video stream for the new channel; a television associated with the STB; and an access network for transmitting to the STB the normal video stream and the companion video stream responsive to the receipt of the control message.

Another embodiment is a set top box ("STB") for an Internet Protocol television ("IPTV") system. The STB comprises means for sending a control message to an access network to join an IP multicast group pair comprising a normal video stream and a companion video stream for the new channel responsive to receipt of a request to view a new channel; means for receiving both the normal video stream and the companion video stream from the access network; and means for decoding and displaying the companion video stream upon receipt thereof on a television associated with the STB.
BRIEF DESCRIPTION OF THE DRAWINGS

A more complete understanding of the present invention may be had by reference to the following Detailed Description when taken in conjunction with the accompanying drawings wherein:

FIG. 1 depicts a system block diagram of an IPTV network in accordance with an embodiment for implementing channel changes in IPTV systems; and

FIG. 2 depicts a flowchart of the operation of an embodiment for implementing channel changes in IPTV systems.
DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

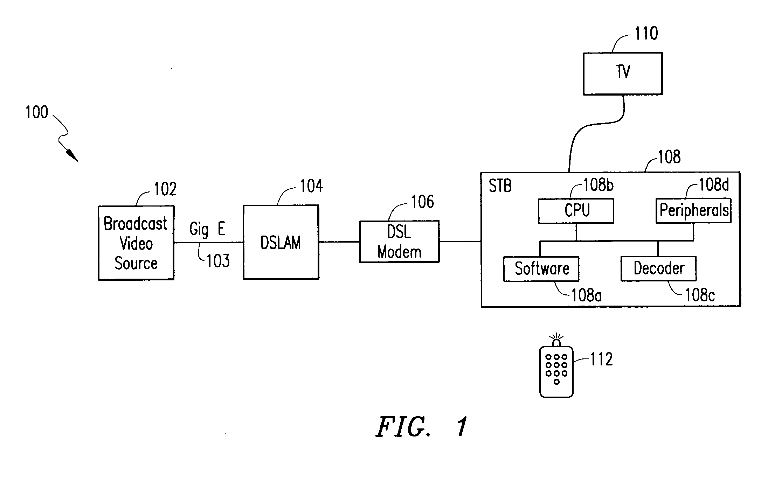

FIG. 1 is a system block diagram of a IPTV network 100 in accordance with one embodiment. As illustrated in FIG. 1, a broadcast video source (BVS) 102 is connected via a Gigabit Ethernet ("GigE") connection 103 to an access network comprising a Digital Subscriber Line Access Multiplexer ("DSLAM") 104. The BVS 102 performs multidescription coding; that is, it codes a normal video stream and a corresponding companion video stream for each of a plurality of broadcast channels available for selection by a subscriber. All of the video streams coded by the BVS 102 are provided to the DSLAM 104 via the GigE connection 103 or other similar transmission medium suitable for carrying IP packet multiplexed video data streams. As used herein, the term "video data stream" refers to the apparent service level to the end user for delivering TV services. IP multicast is a method in IPTV systems to help deliver broadcast TV channel signals or broadcast signals. The DSLAM 104 functions to connect one or more DSL modems, such as a DSL modem 106, to the connection 103.

In general, IPTV employs a digital broadcast signal that is sent by way of a broadband connection (e.g., DSL) and an STB, such as an STB 108. The STB 108 is programmed with software instructions 108a executable by a CPU 108b for handling subscriber requests to access media sources and controlling operation of components of the STB 108. The STB 108 further includes a decoder 108c for decoding the received IP video stream, as well as one or more peripherals 108d. A television ("TV") 110 is connected to the STB 108. It will be recognized that the STB 108 may be implemented as a standalone unit or may be integrated into the TV 110. As previously noted, the STB 108 handles the task of decoding the received IP video signals and converting them to standard television signals for display on the TV 110.

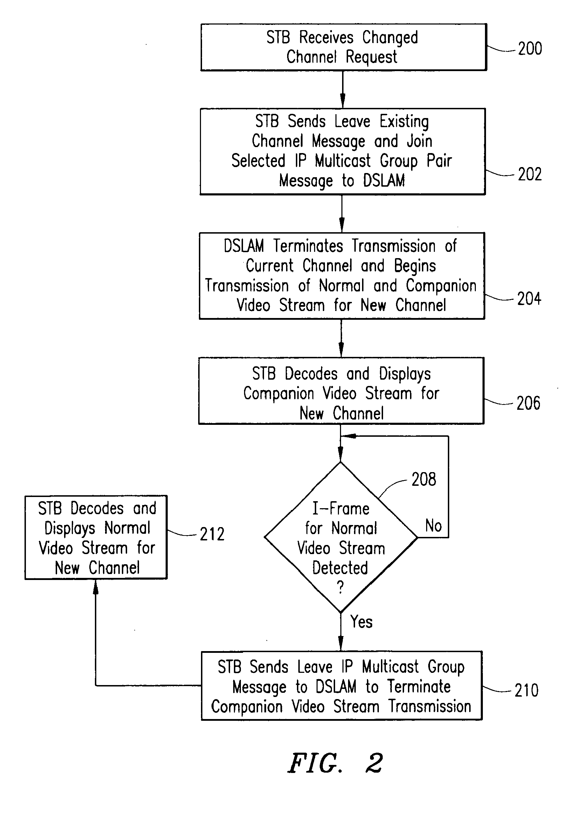

Channel change is a function that occurs responsive to a TV viewer selecting a new broadcast channel to be displayed on the TV 110, e.g., by using a remote control 112, or other channel selection means, associated with the STB 108. FIG. 2 depicts a flowchart illustrating operation of one embodiment for implementing a channel change operation in an IPTV network, such as the network 100. In step 200, the STB 108 receives a channel change request. In step 202, the STB 108 sends a control message to the DSLAM 104 to leave the channel currently being viewed (i.e., Leave Existing Channel). Contemporaneously, the STB 108 sends control messages to the DSLAM 104 to join the IP multicast group pair comprising the normal video stream for the newly selected channel, as well as the companion video stream for the newly selected channel (i.e., Join/Join To Selected IP Multicast Group Pair).

In step 204, responsive to receipt of the control messages sent in step 202, the DSLAM 104 terminates transmission of the normal video stream for the current channel to the DSL access facilities for the STB 108 and begins transmission to the STB 108 of the normal and companion video streams for the newly selected channel via the DSL modem 106 (i.e., Update Forwarding Table for IP Multicast Group Pair).

It will be recognized that, as described above, in one implementation, in response to the Join command from the STB 108, the DSLAM associates the command to a process that cycles the delivery of video for the new channel by first joining to the multicast group comprising the companion video stream for the new channel Then, after some time delay, the DSLAM 104 terminates the connection to that multicast group and joins to the multicast group comprising the normal video stream for the new channel. In step 206, the STB 108 decodes and displays the companion video stream for the newly selected channel.

In step 208, a determination is made whether the STB 108 has detected an I-Frame in the normal video stream. If not, execution remains at step 208; otherwise, execution proceeds to step 210. In step 210, the STB 108 sends a control message to the DSLAM 104 to leave from the companion video stream (i.e., Leave IP Multicast Group). Upon receipt of the message, the DSLAM 104 terminates transmission of the companion video stream to the STB 108 (i.e., Update Forwarding Table for IP Multicast Group). In step 212, the STB 108 decodes and displays the normal video stream for the newly selected channel.

An advantage of the embodiments described herein is that the DSLAM acts on channel change control messages as they arrive from the STB and does not have to execute a process to cycle the channel change video streams.

Another advantage of the embodiments described herein is that the STB video decoder can coordinate the timing of the transition between the two video streams to ensure a glitchless video display.
The following method, the following system as well as the following features, separately or in any combination, may also constitute advantageous embodiments of the described or claimed invention:
- The claimed and/or described method further comprising, responsive to receipt of the control message from the STB to leave the channel currently being viewed, the access network terminates transmission to the STB of a video stream for the channel currently being displayed;
- A method of operating an STB to implement a channel change in an Internet Protocol television ("IPTV") system, the method comprising: responsive to receipt of a request to view a new channel, sending a control message to an access network to join an IP multicast group pair comprising a normal video stream and a companion video stream for the new channel; and receiving at the STB the normal video stream and the companion video stream;
- The claimed and/or described method further comprising decoding and displaying the companion video stream upon receipt thereof;
- The claimed and/or described method further comprising, responsive to detection by the STB of an I-Frame in the normal video stream received thereby: terminating decoding and display of the companion video stream; and decoding and displaying the normal video stream;
- The claimed and/or described method further comprising, responsive to detection of an I-Frame, in the normal video stream, sending a control message to the access network to leave from the companion video stream;
- The claimed and/or described method wherein, upon receipt of the control message to leave from the companion video stream, the access network terminates transmission of the companion video stream to the STB;
- An Internet Protocol television ("IPTV") system comprising: a set top box ("STB") for receiving a request to view a new channel and, responsive to the request, transmitting a control message to join an IP multicast group pair comprising a normal video stream and a companion video stream for the new channel; a television associated with the STB; and an access network for transmitting to the STB the normal video stream and the companion video stream responsive to receipt of the control message;
- The claimed and/or described system wherein the access network comprises a Digital Subscriber Line Access Multiplexer ("DSLAM");
- The claimed and/or described system wherein the STB comprises a video decoder for decoding and displaying the companion video stream on the associated television upon receipt thereof from the access network;
- The claimed and/or described system wherein responsive to detection by the STB of an I-Frame in the normal video stream received thereby, the STB terminates decoding and display of the companion video stream and initiates decoding and display of the normal video stream;
- The claimed and/or described system wherein responsive to detection of an I-Frame in the normal video stream, the STB sends a control message to the access network to leave from the companion video stream;
- The claimed and/or described system wherein responsive to receipt of the control message to leave from the companion video stream, the access network terminates transmission of the companion video stream to the STB;
- The claimed and/or described system wherein contemporaneously with the STB sending a control message to the access network joining an IP multicast group pair, the STB sends a control message to leave a channel currently being viewed;
- The claimed and/or described system wherein responsive to receipt of the control message from the STB to leave the channel currently being viewed, the access network terminating transmission to the STB of a video stream for the channel currently being displayed;
- The claimed and/or described system wherein the STB is a standalone unit;
- The claimed and/or described system wherein the STB is integrated into the television.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of implementing a channel change in an Internet Protocol television ("IPTV") system comprising a set top box ("STB") connected between a TV and an access network, the method comprising:
responsive to a request to view a new channel, the STB sending a control message to the access network to join an IP multicast group pair comprising a normal video stream and a companion video stream for the new channel; and
responsive to receipt of the control message, the access network transmitting to the STB the normal video stream and the companion video stream.

2. The method of claim 1 further comprising the STB decoding and displaying the companion video stream upon receipt thereof.

3. The method of claim 2 further comprising, responsive to detection by the STB of an I-Frame in the normal video stream received thereby, the STB:
terminating decoding and display of the companion video stream; and
decoding and displaying the normal video stream.

4. The method of claim 3 further comprising, responsive to detection of an I-Frame in the normal video stream, the STB sending a control message to the access network to leave from the companion video stream.

5. The method of claim 4 further comprising, responsive to receipt of the control message to leave from the companion video stream, the access network terminating transmission of the companion video stream to the STB.

6. The method of claim 1 further comprising, contemporaneously with the STB sending a control message to the access network join an IP multicast group pair, the STB sending a control message to leave a channel currently being viewed.

7. A set top box ("STB") for an Internet Protocol television ("IPTV") system comprising:
means for sending a control message to an access network to join an IP multicast group pair comprising a normal video stream and a companion video stream for the new channel responsive to receipt of a request to view a new channel;
means for receiving both the normal video stream and the companion video stream from the access network; and
means for decoding and displaying the companion video stream upon receipt thereof on a television associated with the STB.

8. The STB of claim 7 further comprising means for detecting an I-Frame in the normal video stream received by the STB, wherein responsive to the I-Frame detection, the STB terminates decoding and display of the companion video stream and initiates decoding and display of the normal video stream.

9. The STB of claim 8 further wherein responsive to the I-Frame detection, the STB sends a control message to the access network to leave from the companion video stream.

10. The STB of claim 7 wherein the STB is integrated into the associated television.
